# FASCICULE DE BREVET EUROPEEN

(11) **EP 1 420 607 B1**
(45) Date de publication et mention de la délivrance du brevet: **23.03.2011**
(21) Numéro de dépôt: 03292656.0
(22) Date de dépôt: 24.10.2003
(51) Int. Cl.: H04W 36/14

(54) **Procédé et contrôleur pour faciliter l'itinérance des téléphones mobiles**
Verfahren und Steuereinheit zum Erleichtern des Roamings von Mobiltelefonen
Method and controller to facilitate roaming of mobile telephones

(30) Priorité: 12.11.2002 FR 0214099
(43) Date de publication de la demande: 19.05.2004
(73) Titulaire: Alcatel Lucent, 75008 Paris (FR)
(72) Inventeur: Saada, Stéphane, 94120 Fontenay sous Bois (FR)
(74) Mandataire: El Manouni, Josiane

(56) Documents cités:
- WO-A-98/05176
- WO-A-02/076133
- AUDESTAD J A: "NETWORK ASPECTS OF THE GSM SYSTEM" AREA COMMUNICATION. STOCKHOLM, JUNE 13 - 17, 1988, PROCEEDINGS OF THE EUROPEAN CONFERENCE ON ELECTROTECHNICS. (EUROCON), NEW YORK, IEEE, US, vol. CONF. 8, 13 juin 1988 (1988-06-13), pages 462-464, XP000010531

## Description

L'invention est relative à un procédé pour faciliter l'itinérance des téléphones mobiles. Elle concerne également un réseau faisant appel à un tel procédé ainsi que des équipements de ce réseau.

On sait que dans un système de téléphonie mobile, chaque terminal communique avec la station de base de la cellule dans laquelle il se trouve et c'est cette station de base qui met en communication le mobile avec l'ensemble du réseau.

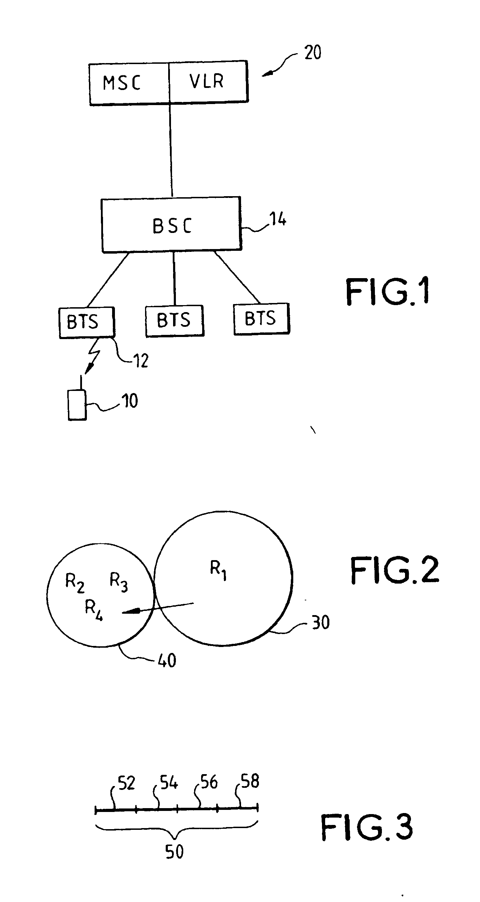

La figure 1 représente un réseau de téléphonie mobile. Un téléphone 10 communique par radio avec une station de base 12 BTS. Cette station de base 12 est reliée au coeur du réseau 20 par l'intermédiaire d'un contrôleur 14 de station de base. C'est ainsi par l'intermédiaire du coeur du réseau que le mobile communique avec les autres mobiles ou avec des téléphones fixes ou avec d'autres terminaux de télécommunication.

Dans le coeur du réseau, se trouve un commutateur MSC ("Mobile Switching Center") et une base de données VLR ("Visitor Location Register") qui fournit des renseignements sur tous les mobiles connectés au commutateur.

Un tel réseau de télécommunication est, en général, géré par un opérateur ou par un nombre limité d'opérateurs.

Pour permettre l'itinérance (souvent appelée "roaming"), c'est-à-dire pour qu'un mobile puisse communiquer alors qu'il se trouve dans une cellule d'un opérateur auquel il n'a pas souscrit d'abonnement, les opérateurs concluent des accords. Pour permettre la mise en oeuvre de ces accords, à chaque terminal mobile est affecté un code d'identité internationale d'abonné mobile (IMSI, "International Mobile Subscriber Identity"). Ce code identifie sans ambiguïté le terminal mobile et comprend un identifiant de l'opérateur auquel le mobile est abonné avec les droits correspondants de l'abonné.

Ce code IMSI n'est pas transmis en permanence vers la station de base 12 pour des raisons de sécurité car la communication radio entre le mobile 10 et cette station de base 12 est aisément captable et, ainsi, un fraudeur pourrait s'approprier le code IMSI pour profiter des droits correspondants. Ce code est seulement conservé dans la base de données VLR du coeur du réseau 20. Cependant, pour permettre l'identification en permanence du mobile 10 quand il se trouve sous la couverture du réseau 14, 20, on lui affecte un code temporaire TMSI appelé "Identité temporaire d'abonné mobile" ("Temporary Mobile Subscriber Identity").

Quand le mobile commence à quitter la zone couverte par le réseau 14, 20, par exemple quand il passe une frontière, c'est le contrôleur 14 qui doit prendre la décision de transfert d'une communication en cours vers un autre réseau vers lequel se dirige le mobile. Mais comme le code temporaire TMSI ne contient pas d'indications sur l'opérateur d'origine du mobile, ce contrôleur ne peut déterminer si le mobile a droit ou non de communiquer par l'intermédiaire du (ou des) réseau(x) voisin(s). Dans ces conditions, la communication en cours est interrompue et elle peut être reprise quand le mobile a transféré son code IMSI au coeur du réseau voisin.

Pour remédier à cet inconvénient, on a proposé de stocker le code IMSI dans les contrôleurs 14. Mais ce transfert, dont la normalisation est en cours de discussion, implique une modification de l'interface entre le coeur du réseau 20 et le contrôleur 14 et, de plus, implique des capacités de mémoire de ce contrôleur 14 plus importantes qu'aujourd'hui car les codes IMSI présentent un nombre de bits sensiblement plus élevé que le nombre de bits des codes temporaires TMSI.

Le document WO-A-98/05176 décrit un système dans lequel une portion de bits à l'intérieur du TMSI est codée sur la base de classification de groupe d'utilisateurs.

L'invention fournit un procédé permettant le transfert sans coupure d'une communication d'un réseau à un autre qui soit particulièrement simple à mettre en oeuvre.

Dans le procédé conforme à l'invention, le coeur du réseau transmet au contrôleur de station de base une information, distincte du code IMSI, représentant les droits dont dispose ce mobile. Cette information est de préférence codée avec un nombre de bits inférieur au code normalisé représentant l'opérateur et les droits du mobile (code HPLMN).

Dans un mode de réalisation, pour limiter le nombre de bits de l'information représentant les droits du mobile, on transmet au contrôleur de station de base la liste des réseaux voisins avec lesquels le mobile a le droit de communiquer. Par exemple, si trois réseaux autorisés pour le mobile se trouvent au voisinage du réseau dans lequel se trouve momentanément le mobile mais est sur le point de quitter, le contrôleur de la station de base effectuera le transfert de la communication vers un de ces réseaux si un seul de ceux-ci est disponible ou, si plusieurs réseaux voisins autorisés sont disponibles, le contrôleur effectuera le transfert selon un critère prédéterminé tel qu'un choix au hasard, ou choisira le réseau permettant la meilleure réception. Si l'un de ces réseaux voisins correspond au réseau auquel le mobile est abonné alors, bien entendu, ce réseau constituera le réseau cible.

Il est à noter que les réseaux voisins peuvent être opérés par un même opérateur mais que l'opérateur peut disposer de deux types de réseaux, par exemple un réseau GSM et un réseau UMTS. Dans ce cas, le code transmis au contrôleur de station de base du réseau d'origine représente le droit au réseau UMTS ou au réseau GSM et permet donc de transférer les communications en cours vers le réseau auquel a droit l'abonné.

Dans le mode de réalisation préféré de l'invention, l'information relative aux droits de l'abonné est incluse dans le code temporaire TMSI.

Quand on utilise le code TMSI pour transmettre les droits dont dispose l'abonné, aucun des équipements du réseau ne nécessite de modification substantielle, ni de capacité de mémoire importante. Dans ce cas, il suffit que les équipements de coeur de réseau comportent un moyen pour transmettre au contrôleur de station de base une information sur les droits dont dispose le mobile, cette information étant de préférence insérée dans le code temporaire TMSI.

Ainsi, l'invention concerne, selon la revendication 1, un procédé de gestion des communications dans un réseau de terminaux mobiles comprenant un coeur de réseau, un contrôleur de réseau contrôlant des stations de base, le contrôleur de stations de base étant utilisé pour commander le transfert de la communication en cours sur le réseau vers un réseau cible quand le mobile s'apprête à quitter le domaine de couverture du premier réseau. Ce procédé est caractérisé en ce que, pour permettre le transfert vers le réseau cible, le coeur du réseau transmet au contrôleur une information représentant les droits dont dispose le mobile à communiquer par l'intermédiaire dudit réseau cible cette information étant distincte du code d'identité internationale d'abonné mobile.

Dans une réalisation, l'information communiquée au contrôleur de stations de base relative aux droits du terminal mobile est limitée aux droits sur les réseaux voisins.

Le réseau cible est, dans une réalisation, choisi selon un critère prédéterminé si plusieurs réseaux cibles sont disponibles, ce critère prédéterminé étant, par exemple, la meilleure réception.

L'information relative aux droits est, de préférence, insérée dans le code d'identité temporaire d'abonné mobile (TMSI). Dans ce cas, la partie du code TMSI désignant l'abonné peut comprendre des champs relatifs aux droits de l'abonné dans chacun des réseaux voisins.

L'invention concerne aussi un contrôleur de stations de base selon la revendication 6.

Selon une réalisation, l'information communiquée au contrôleur de stations de base, qui est relative aux droits du terminal mobile, est limitée aux droits sur les réseaux voisins.

Ce contrôleur peut comprendre des moyens pour commander le transfert de la communication en cours vers un réseau voisin choisi en fonction de l'information relative aux droits de l'abonné.

L'information relative aux droits de l'abonné est, de préférence, insérée dans le code d'identité temporaire d'abonné mobile TMSI. Dans ce cas, la partie du code TMSI désignant l'abonné peut comprendre des champs relatifs aux droits de l'abonné dans chacun des réseaux voisins.

L'invention concerne aussi un équipement de coeur de réseau selon la revendication 11.

D'autres caractéristiques et avantages de l'invention apparaîtront avec la description de certains de ses modes de réalisation, celle-ci étant effectuée en se référant aux dessins ci-annexés, sur lesquels :
la figure 1, déjà décrite, représente de façon schématique un réseau de téléphonie mobile,
la figure 2 représente un mobile dit en zone couverte par un réseau pour entrer dans une zone où se trouve plusieurs autres réseaux, et
la figure 3 représente une partie d'un code temporaire utilisé conformément à l'invention.

Le problème que vise à résoudre l'invention consiste, comme expliqué ci-dessus, à permettre qu'un mobile quittant une zone 30 couverte par un réseau R1 pour pénétrer dans une zone 40 couverte par des réseaux R2, R3, R4, puisse être transféré vers l'un de ces réseaux sans interruption de communication et avec une modification minimale des réseaux pré-existants R1, R2, R3 et R4 (figure 2).

À cet effet, dans l'exemple, le code TMSI d'identité temporaire d'abonné mobile est utilisé pour fournir une information sur les droits dont dispose l'abonné.

Dans cet exemple, le nombre de bits sélectionnés dans le code TMSI est inférieur au nombre de bits du code HPLMN. Ainsi, dans l'exemple représenté sur la figure 3, le code TMSI comporte un champ 50 qui est divisé en quatre parties. La première partie 52 représente le réseau R2, la partie 54 représente le réseau R3, la partie 56 représente le réseau R4 et la partie 58 correspond à une autre indication. Si le mobile 10 a droit au seul réseau R2 alors un ou plusieurs bits dans le champ 52 sont utilisés pour indiquer ce droit. De même, si le mobile 10 a un droit d'accès au réseau R3 ou R4 alors un ou plusieurs bits dans les champs 54 ou 56 est utilisé pour indiquer ce droit. Enfin, si le mobile peut accéder à deux ou trois des réseaux R2, R3, R4 alors le champ 58 est utilisé pour indiquer un critère de choix du réseau cible, par exemple un choix aléatoire ou un choix correspondant à la meilleure réception. Il est à noter que le champ 50 correspond à une partie pré-existante, dénuée de syntaxe, du code TMSI.

Ainsi, le contrôleur 14 du réseau R1 transmet au contrôleur correspondant du réseau cible sélectionné R2, R3 ou R4 l'information que la communication doit être transférée vers ce réseau cible.

## Revendications

1. Procédé de gestion des communications dans un réseau de terminaux mobiles comprenant un coeur de réseau (20), un contrôleur de réseau (14) contrôlant des stations de base (12), le contrôleur de stations de base étant utilisé pour commander le transfert de la communication en cours sur le réseau vers un réseau cible quand le mobile s'apprête à quitter le domaine de couverture du premier réseau, **caractérisé en ce que**, pour permettre le transfert vers le réseau cible (R₂, R₃, R₄), le coeur du réseau transmet au contrôleur (14) une information représentant les droits dont dispose le mobile à communiquer par l'intermédaire dudit réseau cible, cette information étant distincte du code d'identité internationale d'abonné mobile.

2. Procédé selon la revendication 1, **caractérisé en ce que** l'information communiquée au contrôleur de stations de base relative aux droits du terminal mobile est limitée aux droits sur les réseaux voisins (R2, R3, R4).

3. Procédé selon la revendication 1 ou 2, **caractérisé en ce que** le réseau cible est choisi selon un critère prédéterminé si plusieurs réseaux cibles sont disponibles, ce critère prédéterminé étant, par exemple, la meilleure réception.

4. Procédé selon la revendication 1, 2 ou 3, **caractérisé en ce que** l'information relative aux droits est insérée dans le code d'identité temporaire d'abonné mobile (TMSI).

5. Procédé selon la revendication 4, **caractérisé en ce que** la partie du code TMSI désignant l'abonné comprend des champs relatifs aux droits de l'abonné dans chacun des réseaux voisins.

6. Contrôleur de stations de base d'un réseau de télécommunication pour terminaux mobiles, **caractérisé en ce qu'**il comprend des moyens pour recevoir du coeur du réseau, pour chaque mobile, une information, distincte du code d'identité internationale d'abonné mobile, relative aux droits dont dispose l'abonné à communiquer par l'intemédiaire de réseau cible pour un transfert de communication en cours sur un réseau vers ledit réseau cible.

7. Contrôleur selon la revendication 6, **caractérisé en ce que** l'information communiquée à ce contrôleur de stations de base, qui est relative aux droits du terminal mobile, est limitée aux droits sur les réseaux voisins (R2, R3, R4).

8. Contrôleur selon la revendication 6 ou 7, **caractérisé en ce qu'**il comprend des moyens pour commander le transfert de la communication en cours vers un réseau voisin choisi en fonction de l'information relative aux droits de l'abonné.

9. Contrôleur selon l'une des revendications 6 à 8, **caractérisé en ce que** l'information relative aux droits est insérée dans le code d'identité temporaire d'abonné mobile (TMSI).

10. Contrôleur selon la revendication 9, **caractérisé en ce que** la partie du code TMSI désignant l'abonné comprend des champs relatifs aux droits de l'abonné dans chacun des réseaux voisins.

11. Equipement de coeur de réseau d'un réseau de télécommunication pour terminaux mobiles, **caractérisé en ce qu'**il comprend des moyens pour émettre vers au moins un contrôleur de stations de base, pour chaque mobile, une information, distincte du code d'identité internationale d'abonné mobile, relative aux droits dont dispose l'abonné à communiquer par l'intemédiaire de réseau cible pour un transfert de communication en cours sur un réseau vers ledit réseau cible.

12. Equipement selon la revendication 11, **caractérisé en ce que** l'information communiquée à ce contrôleur de stations de base, qui est relative aux droits du terminal mobile, est limitée aux droits sur les réseaux voisins (R2, R3, R4).

13. Equipement selon l'une des revendications 11 ou 12, **caractérisé en ce que** l'information relative aux droits est insérée dans le code d'identité temporaire d'abonné mobile (TMSI).

14. Equipement selon la revendication 13, **caractérisé en ce que** la partie du code TMSI désignant l'abonné comprend des champs relatifs aux droits de l'abonné dans chacun des réseaux voisins.

## Claims

1. A method of managing calls in a mobile telephone network comprising a network core (20), and a network controller (14) controlling base stations (12), the base station controller being used to control the transfer of an ongoing call on the network to a target network when the mobile terminal is about to leave the coverage zone of the first network, the method being **characterized in that** in order to enable the transfer to take place to the target network (R2, R3, R4), the network core transmits information to the controller (14) representing the rights available to the mobile terminal for communicating by means of said target network, this information being distinct from the international identity code of the mobile subscriber.

2. A method according to claim 1, **characterized in that** the information communicated to the base station controller concerning the rights of the mobile terminal is restricted to rights relating to the neighboring networks (R2, R3, R4).

3. A method according to claim 1, **characterized in that** the target network is selected in application of a predetermined criterion whenever a plurality of target networks are available, the predetermined criterion being best reception, for example.

4. A method according to claim 1, **characterized in that** the information relating to rights is inserted in the temporary mobile subscriber identity (TMSI) code.

5. A method according to claim 4, **characterized in that** the portion of the TMSI code designating the subscriber includes fields relating to the subscriber's rights in each or the neighboring networks.

6. A base station controller of a telecommunications network for mobile telephones, the controller being **characterized in that** it includes means for receiving information from the network core in respect of each mobile terminal, which information is distinct from the international mobile subscriber identity of the mobile subscriber and relates to the rights available to the subscriber to communicate by means of the target network for a transfer of ongoing communication over network onto said target network.

7. A controller according to claim 6, **characterized in that** the information communicated to the base station controller relating to the rights of the mobile terminal is restricted to its rights over the neighboring networks (R2, R3, R4).

8. A controller according to claim 6, **characterized in that** it includes means for causing an ongoing call to be transferred to a neighboring network selected as a function of the information relating to the subscriber's rights.

9. A controller according to claim 6, **characterized in that** the information relating to the subscriber's rights is inserted in the temporary mobile subscriber identity (TMSI) code.

10. A controller according to claim 9, **characterized in that** the portion of the TMSI code designating the subscriber includes fields relating to the subscriber's rights over each of the neighboring networks.

11. Network core equipment for a telecommunications network for mobile terminals, which equipment is **characterized in that** it includes means for sending information in respect of each mobile terminal to at least one base station controller, regarding the rights of the subscriber to communicate by means of the target network for a transfer of ongoing communication over a network onto said target network.

12. Equipment according to claim 11, **characterized in that** the information communicated to that base station controller, which regards the mobile terminal's rights, is limited to rights on neighboring networks (R2, R3, R4).

13. Equipment according to claim 11, **characterized in that** the information regarding rights is inserted into the temporary mobile subscriber identity code (TMSI).

14. Equipment according to claim 13, **characterized in that** the part of the TMSI code designating the subscriber comprises fields regarding the subscriber's rights in each of the neighboring networks.

## Patentansprüche

1. Verfahren zur Verwaltung der Kommunikation in einem Netzwerk für mobile Endgeräte, welches einen Netzwerkkern (20), eine Netzwerksteuereinheit (14), die Basisstationen (12) steuert, umfasst, wobei die Basisstations-Steuereinheit verwendet wird, um das Weiterreichen der momentan auf dem Netzwerk stattfindenden Kommunikation an ein Zielnetzwerk zu steuern, wenn das Mobilgerät im Begriff ist, den Abdeckungsbereich des ersten Netzwerks zu verlassen, **dadurch gekennzeichnet, dass**, um das Weiterreichen an das Zielnetzwerk (R₂, R₃, R₄) zu ermöglichen, der Kern des Netzwerks eine Information, welche die Rechte darstellt, über die das Mobilgerät für die Kommunikation über das besagte Zielnetzwerk verfügt, an die Steuereinheit (14) sendet, wobei sich diese Information von dem internationalen Mobilfunkteilnehmer-Identitätscode unterscheidet.

2. Verfahren nach Anspruch 1, **dadurch gekennzeichnet, dass** die an die Basisstations-Steuervorrichtung mitgeteilte Information bezüglich der Rechte des mobilen Endgeräts auf die Rechte auf den benachbarten Netzwerken (R₂, R₃ R₄) beschränkt ist.

3. Verfahren nach Anspruch 1 oder 2, **dadurch gekennzeichnet, dass** das Zielnetzwerk gemäß einem vorgegebenen Kriterium gewählt wird, wenn mehrere Zielnetzwerke verfügbar sind, wobei dieses vorgegebene Kriterium beispielsweise der beste Empfang ist.

4. Verfahren nach Anspruch 1, 2 oder 3, **dadurch gekennzeichnet, dass** die Information bezüglich der Rechte in dem zeitlich begrenzten Mobilfunkteilnehmer-Identitätscode (TMSI) enthalten ist.

5. Verfahren nach Anspruch 4, **dadurch gekennzeichnet, dass** der Abschnitt des TMSI-Codes, welcher den Teilnehmer bezeichnet, Felder in Bezug auf die Rechte des Teilnehmers in einem jeden der benachbarten Netzwerke umfasst.

6. Steuereinheit für Basisstationen in einem Telekommunikationsnetzwerk für mobile Endgeräte, **dadurch gekennzeichnet, dass** sie Mittel umfasst, um von dem Kern des Netzwerks für jedes Mobilgerät eine Information, welche sich von dem internationalen Mobilfunkteilnehmer-Identitätscode unterscheidet, in Bezug auf die Rechte, über welche der Teilnehmer zur Kommunikation über das Zielnetzwerk für ein Weiterreichen der momentan auf einem Netzwerk stattfindenden Kommunikation an das besagte Zielnetzwerk verfügt, zu empfangen.

7. Steuereinheit nach Anspruch 6, **dadurch gekennzeichnet, dass** die an diese Basisstations-Steuereinheit mitgeteilte Information, welche sich auf die Rechte des mobilen Endgeräts bezieht, auf die Rechte auf den benachbarten Netzwerken (R₂, R₃, R₄) beschränkt ist.

8. Steuereinheit nach Anspruch 6 oder 7, **dadurch gekennzeichnet, dass** sie Mittel zum Steuern des Weiterreichens der momentan stattfindenden Kommunikation an ein gemäß der Information bezüglich der Rechte des Teilnehmers gewähltes benachbartes Netzwerk umfasst.

9. Steuereinheit nach einem der Ansprüche 6 bis 8, **dadurch gekennzeichnet, dass** die Information bezüglich der Rechte in dem zeitlich begrenzten Mobilfunkteilnehmer-Identitätscode (TMS1) enthalten ist.

10. Steuereinheit nach Anspruch 9, **dadurch gekennzeichnet, dass** der Abschnitt des TMSI-Codes, welcher den Teilnehmer bezeichnet, Felder bezüglich der Rechte des Teilnehmers in einem jeden der benachbarten Netzwerke enthält.

11. Netzwerkkern-Ausrüstung in einem Telekommunikationsnetzwerk für mobile Endgeräte, **dadurch gekennzeichnet, dass** sie Mittel umfasst, um für jedes Mobilgerät eine Information, welche sich von dem internationalen Mobilfunkteilnehmet-Identitätscode unterscheidet, bezüglich der Rechte, über welche der Teilnehmer für die Kommunikation über das Zielnetzwerk für ein Weiterreichen einer momentan auf dem Netzwerk stattfindenden Kommunikation an das besagte Zielnetzwerk verfügt, an mindestens eine Basisstations-Steuereinheit auszugeben.

12. Ausrüstung nach Anspruch 11, **dadurch gekennzeichnet, dass** die an diese Basisstations-Steuereinheit mitgeteilte Information, welche sich auf die Rechte des mobilen Endgeräts bezieht, auf die Rechte auf den benachbarten Netzwerken (R₂, R₃, R₄) beschränkt ist.

13. Ausrüstung nach einem der Ansprüche 11 oder 12, **dadurch gekennzeichnet, dass** die Information bezüglich der Rechte in dem zeitlich begrenzten Mobilfunkteilnehmer-Identitätscode (TMSI) enthalten ist.

14. Ausrüstung nach Anspruch 13, **dadurch gekennzeichnet, dass** der Abschnitt des TMSI-Codes, welcher den Teilnehmer bezeichnet, Felder bezüglich der Rechte des Teilnehmers in einem jeden der benachbarten Netzwerke enthält-
